# EUROPÄISCHE PATENTSCHRIFT

(11) **EP 1 022 475 B1**
(45) Veröffentlichungstag und Bekanntmachung des Hinweises auf die Patenterteilung: **15.09.2004**
(21) Anmeldenummer: 99124438.5
(22) Anmeldetag: 08.12.1999
(51) Int. Cl.: F16C 1/14

(54) **Anordnung zur Positionierung eines mit einer Verdickung versehenden Endes einer Bowdenzugseele**
Device for positionning the thickened edge of a bowden cable core
Dispositif de positionnement de l'embout épaissit d'un câble bowden

(30) Priorität: 19.01.1999 DE 19901816
(43) Veröffentlichungstag der Anmeldung: 26.07.2000
(73) Patentinhaber: Volkswagen Aktiengesellschaft, 38436 Wolfsburg (DE)
(72) Erfinder: Meyer, Dieter, 38442 Wolfsburg (DE); Siemsen, Bernd, 38162 Destedt (DE)

(56) Entgegenhaltungen:
- EP-A- 0 183 341
- EP-A- 0 855 527
- EP-A- 0 857 881
- DE-A- 19 619 869
- GB-A- 1 235 447
- GB-A- 2 315 516

## Beschreibung

Die Erfindung betrifft eine Anordnung gemäß dem Oberbegriff des Patentanspruchs 1.

Eine solche Anordnung ist beispielsweise aus EP-A-857 881 bekannt.

Die Aufgabe, eine Bowdenzugseele über eine an ihrem Ende befindliche, in der Regel kugelförmige Verdickung an einem gabelförmigen Lagerbereich eines Bauteils zu positionieren, tritt beispielsweise bei der Befestigung eines Bowdenzugs an einer Sperrklinke eines Tür- oder Deckelschlosses eines Kraftfahrzeugs auf. Der Bowdenzug dient dann der Übertragung von Betätigungskräften zwischen einer Handhabe einerseits und dem Schloß andererseits. In diesem bevorzugten Einsatzfall der Erfindung treten besondere Schwierigkeiten dadurch auf, daß diese Positionierung der Bowdenzugseele nach Einbau von Gehäuse und eigentlichem Schloß in das Kraftfahrzeug vorgenommen werden muß, d.h. dann, wenn der gabelförmige Lagerbereich an der Sperrklinke nur schwer zugänglich und einsehbar ist.

Der Erfindung liegt die Aufgabe zugrunde, eine gattungsgemäße Anordnung zu schaffen, die mit möglichst geringem zusätzlichen Aufwand mit der definierten Positionierung verbundene Montagearbeiten in diesem Ausführungsbeispiel an einem eingebauten Schloß, d.h. allgemein nach Einbau des gabelförmigen Lagerbereichs, vermeidet.

Die erfindungsgemäße Lösung dieser Aufgabe besteht in den kennzeichnenden Merkmalen des Hauptanspruchs, vorteilhafte Ausführungsbeispiele der Erfindung beschreiben die Unteransprüche.

Ein wesentliches Merkmal der erfindungsgemäßen Lösung der definierten Aufgabe besteht also in der Schaffung einer Vormontageeinheit, die einen im folgenden als weiterer Wandbereich bezeichneten Teil der Gehäusewand sowie eine federnde Aufnahme für die Verdickung am Ende der Seele des Bowdenzugs und natürlich diesen Endbereich zumindest der Bowdenzugseele enthält. Die federnde Aufnahme für die Verdickung am Ende der Bowdenzugseele ist so angeordnet und ausgebildet, daß bei nach Verbinden des weiteren Wandbereichs mit dem ortsfesten Wandbereich erfolgendem Aufbringen von Kräften auf die Verdickung, die so gerichtet sind, daß sie eine Streckung der Seele des Bowdenzugs zur Folge haben, die Verdickung praktisch ohne weiteres Zutun einer Bedienungsperson die federnde Aufnahme verläßt und in ihre endgültige Position in oder an dem gabelförmigen Lagerbereich gleitet. Der Monteur braucht also keinerlei Arbeiten an einer unzugänglichen Stelle auszuführen, um die Verdickung und damit das Ende der Bowdenzugseele in dem Lagerbereich beispielsweise an einer Sperrklinke zu positionieren.

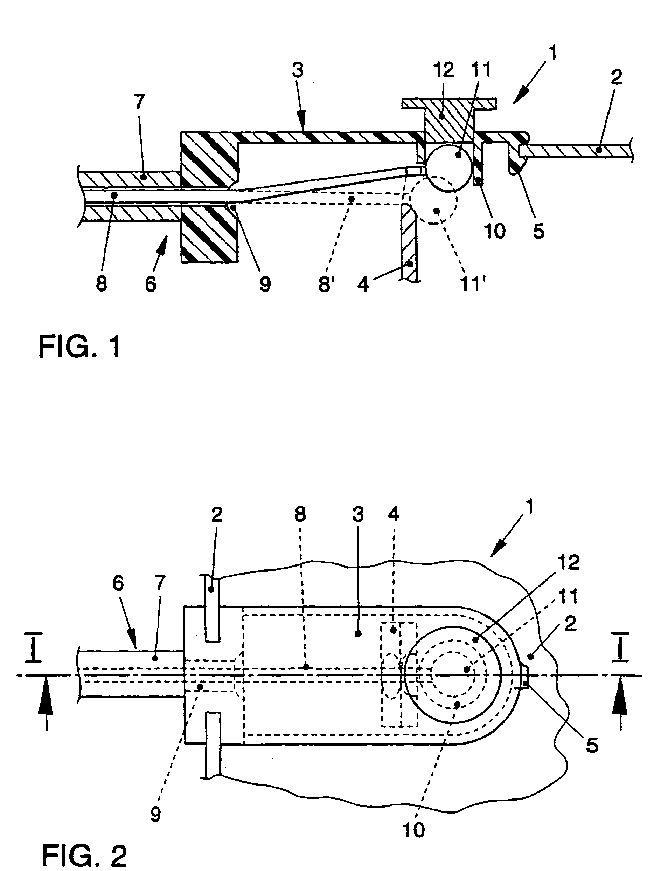

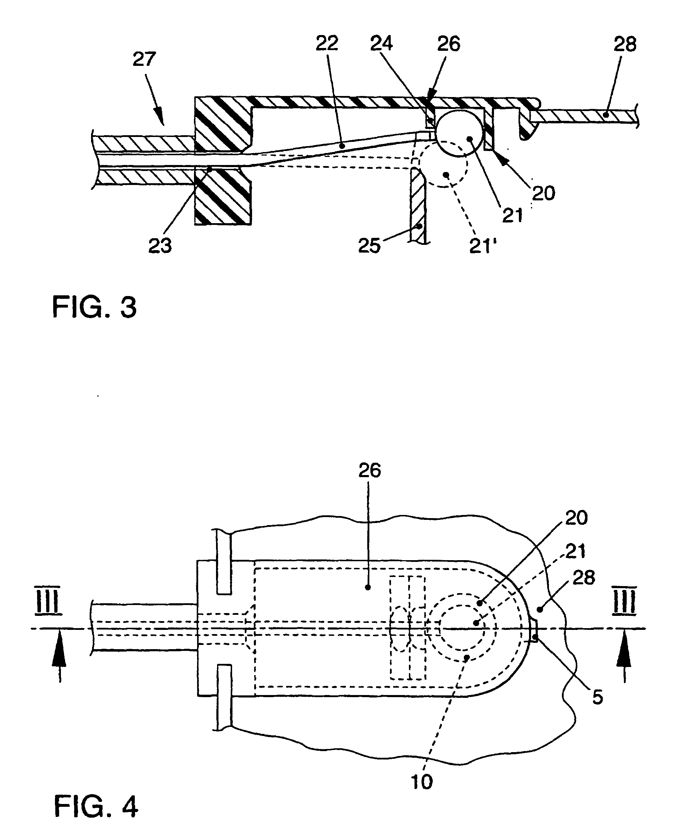

Zwei Ausführungsbeispiele der Erfindung werden im Folgenden anhand der Zeichnung erläutert, deren Figuren 1 und 3 Längsschnitte durch entsprechende Konstruktionen wiedergeben, während die Figuren 2 und 4 Draufsichten sind.

Betrachtet man zunächst die Figuren 1 und 2, wobei in Figur 2 die Schnittführung der Figur 1 bei I-I angedeutet ist, so ist die hier interessierende Schloßgehäusewand 1 in den ortsfesten Wandbereich 2 und den weiteren Wandbereich 3 unterteilt. Während also der Wandbereich 2 zusammen mit dem eigentlichen Schloß, von dem hier nur der gabelförmige Lagerbereich 4 einer Sperrklinke für eine Drehfalle wiedergegeben ist, montiert ist, wird der weitere Wandbereich 3 unter Ausnutzung seiner rinnenförmigen Kante 5, die dann die zugekehrte Kante des ortsfesten Wandbereichs 2 federnd umgreift, nachträglich montiert.

Der allgemein mit 6 bezeichnete, in diesem Einsatz bei der Erfindung beispielsweise zu einem Türaußengriff führende Bowdenzug enthält außer dem Mantel 7, der sich auf der linken Außenseite des weiteren Wandbereichs 3 abstützt, die Seele 8, die die Durchführung 9 des weiteren Wandbereichs 3 durchsetzt. Die Durchführung 9 steht dem gabelförmigen Lagerbereich 4 an der Sperrklinke gegenüber.

Der weitere Wandbereich 3 bildet zugleich die federnde Aufnahme 10 für die kugelförmige Verdickung 11 am Ende der Bowdenzugseele 8. Diese kugelförmige Verdickung 11 wird nach Durchziehen der Seele 8 durch die Durchführung 9 beispielsweise durch Aufpressen auf dem Seelenende festgelegt. In Figur 1 ist angenommen, daß sich die kugelförmige Verdickung 11 noch in der federnden Aufnahme 10 befindet, die eine Vielzahl von Federzungen enthält, die materialeinheitlich mit dem aus Kunststoff gefertigten weiteren Wandbereich 3 sind. Diese Federzungen der federnden Aufnahme 10 bilden also zusammen mit dem eigentlichen weiteren Wandbereich 3, der kugelförmigen Verdickung 11 und dem Bowdenzug 6 eine Vormontageeinheit, die so ausgelegt ist, daß nach Herstellung der Verbindung zwischen den beiden Wandbereichen 2 und 3 (von denen der Wandbereich 2, wie bemerkt, bereits im Fahrzeug montiert ist) die federnde Aufnahme 10 den gabelförmigen Lagerbereich 4 an der Sperrklinke geringfügig hinter- und übergreift. Wird nunmehr der Druckbolzen 12 von dem Monteur betätigt, so wird die kugelförmige Verdickung 11 aus der federnden Aufnahme 10 herausgedrückt in Richtung auf ihre endgültige Positionierung 11', die ebenso wie die endgültige Lage 8' der Seele des Bowdenzugs in Figur 1 durch unterbrochene Linien markiert ist. Da, wie ebenfalls bereits ausgeführt, Durchführung 9 und Lagerbereich 4 sich gegenüberliegen, befindet sich jetzt die Seele 8 bzw. zumindest ihr Endbereich in gestreckter Lage. Zur Durchführung dieser Positionierung der Verdickung 11 in ihrer endgültigen Betriebslage 11' genügt es also, den Druckbolzen 12 zu betätigen; irgendwelche Montagearbeiten in der schwer zugänglichen und schwer einsehbaren Umgebung des Lagerbereichs 4 erübrigen sich. Danach arretiert die federnde Aufnahme 10 die Verdickung 11 in ihrer Betriebslage 11'.

Figur 2 läßt erkennen, daß der weitere Wandbereich 3 relativ klein gehalten sein kann; er ist auch im Bereich der Durchführung 9 durch eine Art Schiebe- oder Steckverbindung mit dem ortsfesten Wandbereich 2 im montierten Zustand verbunden.

Während in dem Ausführungsbeispiel nach Figur 1 ein Druckbolzen 12 zum Ausüben der Positionierungskraft auf die Verdickung 11 dient, verzichtet die Ausführungsform der Erfindung nach den Figuren 3 und 4 auf zusätzliche Mittel und sieht eine solche Auslegung der dort mit 20 bezeichneten federnden Aufnahme für die kugelförmige Verdickung 21 am Ende der Seele 22 des Bowdenzugs vor, daß allein durch Ausübung einer Zugkraft auf die Seele 22 die der Durchführung 23 zugekehrten Federstege 24 der Aufnahme 20 in Positionen verformt werden, in denen sie gleichsam schräge Abrutschrampen für die Verdickung 21 bilden, so daß diese in ihre endgültige Position 21' auf dem gabelförmigen Lagerbereich 25 der Sperrklinke geleitet wird. Auch hier bildet also der weitere Gehäusewandbereich 26 zusammen mit dem Endbereich des allgemein mit 27 bezeichneten Bowdenzugs eine Vormontageeinheit, und die beschriebene Zugkraft wird auf die Seele 22 des Bowdenzugs erst dann aufgebracht, wenn die Verbindung der beiden Gehäuseteile 26 und 28 hergestellt ist. Im übrigen sind die Verhältnisse, wie Figur 4 erkennen läßt (die Schnittführung für Figur 3 ist dort bei lll-lll angedeutet), weitgehend identisch mit denjenigen in den Figuren 1 und 2.

Mit der Erfindung ist demgemäß eine gattungsgemäße Anordnung geschaffen, die praktisch ohne zusätzlichen Aufwand eine erhebliche Montagevereinfachung sicherstellt.

## Patentansprüche

1. Anordnung zur Positionierung eines mit einer Verdickung (11) versehenen Endes einer Bowdenzugseele (8) in einem gabelförmigen Lagerbereich (4) eines Bauteils, das einer Wand (1) benachbart und mittels des Bowdenzugs bewegbar ist, **dadurch gekennzeichnet, daß** die Wand (1) in einen ortsfesten und einen mit diesem verbindbaren und dann neben dem gabelförmigen Lagerbereich (4) des Bauteils liegenden weiteren Wandbereich (2, 3) unterteilt ist, der eine Durchführung (9) für die Seele (8) des Bowdenzugs (6) und eine gegen die Durchführung (9) seitlich versetzte, für die Verdickung (11) am Ende der Seele (8) ausgelegte federnde Aufnahme (10) bildet, die nach Verbindung des weiteren Wandbereichs (3) und damit einer aus ihm sowie dem Bowdenzug (6) bestehenden Vormontageeinheit mit dem ortsfesten Wandbereich (2) den gabelförmigen Lagerbereich (4) etwas hintergreift, der im wesentlichen in Fortsetzung der Durchführung (9) liegt, und daß die federnde Aufnahme (10) derart dimensioniert ist, daß sie die Verdickung (11) bei in Richtung Streckung der Seele (8) wirkenden Querkräften zur selbsttätigen Positionierung auf dem gabelförmigen Lagerbereich (4) freigibt.

2. Anordnung nach Anspruch 1, **dadurch gekennzeichnet, daß** das Bauteil ein Verriegelungsglied, insbesondere eine Sperrklinke, eines in einem Kraftfahrzeug eingesetzten Schlosses und der Bowdenzug (8) Bestandteil einer kraftübertragenden Verbindung zwischen dem Verriegelungsglied und einem Handgriff sind.

3. Anordnung nach Anspruch 1 oder 2, **dadurch gekennzeichnet, daß** die federnde Aufnahme (20) sich bezüglich der Verdickung (21) gegenüberstehende Federzungen enthält, von denen die der Durchführung (23) zugekehrten (24) durch auf die Seele (22) ausgeübte Zugkräfte zu schräg auf den gabelförmigen Lagerbereich (25) weisenden Gleitrampen für die Verdickung (21) verformbar sind.

4. Anordnung nach Anspruch 1 oder 2, **dadurch gekennzeichnet, daß** der weitere Wandbereich (3) an der federnden Aufnahme (10) einen Druckhebel (12), insbesondere einen Druckbolzen, zum Ausstoßen der Verdickung (11) aus der federnden Aufnahme (10) aufweist.

5. Anordnung nach einem der Ansprüche 1 bis 4, **dadurch gekennzeichnet, daß** der weitere Wandbereich (3) und die federnde Aufnahme (10) materialeinheitlich aus Kunststoff bestehen.

6. Anordnung nach Anspruch 5, **dadurch gekennzeichnet, daß** der weitere Wandbereich (3) eine dem ortsfesten Wandbereich (2) zugekehrte rinnenförmige Kante (5) zur Aufnahme einer zugekehrten Kante des ortsfesten Wandbereichs (2) aufweist.

## Claims

1. Arrangement for positioning one end of a Bowden cable core (8) that is provided with a thickened section (11) in a fork-shaped bearing region (4) of a component which is adjacent to a wall (1) and can be moved by means of the Bowden cable, **characterized in that** the wall (1) is divided into a wall region (2) which is positionally fixed and into a further wall region (3) which can be connected to the first wall region and is then situated next to the fork-shaped bearing region (4) of the component and forms a bushing (9) for the core (8) of the Bowden cable (6) and a resilient holder (10) which is offset laterally with respect to the bushing (9), is configured for the thickened section (11) at the end of the core (8) and, after connection of the further wall region (3) and therefore of a preassembly unit, which is composed of it and the Bowden cable (6), to the positionally fixed wall region (2), somewhat engages behind the fork-shaped bearing region (4) which is situated essentially in a continuation of the bushing (9), and **in that** the resilient holder (10) is dimensioned in such a manner that it releases the thickened section (11), when there are transverse forces acting in the direction of extension of the core (8), to automatically position the core on the fork-shaped bearing region (4).

2. Arrangement according to Claim 1, **characterized in that** the component is a locking element, in particular a detent pawl, of a lock used in a motor vehicle, and the Bowden cable (8) is part of a force-transmitting connection between the locking element and a handle.

3. Arrangement according to Claim 1 or 2, **characterized in that** the resilient holder (20) contains spring tongues which face the thickened section (21) and of which the spring tongues (24) facing the bushing (23) can be deformed by means of tensile forces, which are exerted on the core (22), to form sliding ramps, which obliquely face the fork-shaped bearing region (25), for the thickened section (21).

4. Arrangement according to Claim 1 or 2, **characterized in that** the further wall region (3) has a pressure lever (12), in particular a pressure pin, on the resilient holder (10) for the purpose of ejecting the thickened section (11) out of the resilient holder (10).

5. Arrangement according to one of Claims 1 to 4, **characterized in that** the further wall region (3) and the resilient holder (10) consist integrally of plastic.

6. Arrangement according to Claim 5, **characterized in that** the further wall region (3) has a channel-shaped edge (5), which faces the positionally fixed wall region (2), for holding a facing edge of the positionally fixed wall region (2).

## Revendications

1. Dispositif pour le positionnement d'une extrémité pourvue d'un épaississement (11) d'une âme de câble Bowden (8) dans une région de support (4) en forme de fourche d'un composant qui est adjacent à une paroi (1) et peut se déplacer au moyen du câble Bowden, **caractérisé en ce que** la paroi (1) est divisée en une région de paroi fixe et une région de paroi supplémentaire (2, 3) pouvant être connectée à celle-ci et se trouvant alors à côté de la région de support (4) en forme de fourche du composant, la région de paroi supplémentaire formant un passage (9) pour l'âme (8) du câble Bowden (6) et un logement élastique (10) décalé latéralement vers le passage (9), prévu pour l'épaississement (11) à l'extrémité de l'âme (8), lequel logement, après la connexion de la région de paroi supplémentaire (3) et donc d'une unité de prémontage se composant de celle-ci ainsi que du câble Bowden (6) à la région de paroi fixe (2), vient en prise par l'arrière dans une certaine mesure avec la région de support (4) en forme de fourche, qui se trouve essentiellement dans le prolongement du passage (9), et **en ce que** le logement élastique (10) est dimensionné de telle sorte qu'il libère l'épaississement (11) lors de l'application de forces transversales dans la direction de l'étendue de l'âme (8) en vue du positionnement automatique sur la région de support (4) en forme de fourche.

2. Dispositif selon la revendication 1, **caractérisé en ce que** le composant est un organe de verrouillage, notamment un cliquet d'arrêt, d'une serrure insérée dans un véhicule automobile et le câble Bowden (8) est un composant d'une connexion à transfert de force entre l'organe de verrouillage et une poignée.

3. Dispositif selon la revendication 1 ou 2, **caractérisé en ce que** le logement élastique (20) comprend des langues élastiques en regard de l'épaississement (21), dont les nervures élastiques (24) tournées vers le passage (23) peuvent être déformées par des forces de traction exercées sur l'âme (22) pour donner des rampes de glissement tournées de manière oblique vers la région de support (25) en forme de fourche pour l'épaississement (21).

4. Dispositif selon la revendication 1 ou 2, **caractérisé en ce que** la région de paroi supplémentaire (3) présente sur le logement élastique (10) un levier de compression (12), notamment un boulon de compression, pour éjecter l'épaississement (11) hors du logement élastique (10).

5. Dispositif selon l'une quelconque des revendications 1 à 4, **caractérisé en ce que** la région de paroi supplémentaire (3) et le logement élastique (10) se composent d'un matériau unitaire en plastique.

6. Dispositif selon la revendication 5, **caractérisé en ce que** la région de paroi supplémentaire (3) présente un bord (5) en forme de cannelure tourné vers la région de paroi fixe (2) pour recevoir un bord de la région de paroi fixe (2) tourné vers lui.
